# EUROPEAN PATENT APPLICATION

(11) **EP 4 746 130 A1**
(43) Date of publication of application: **20.05.2026**
(21) Application number: 25212508.3
(22) Date of filing: 30.10.2025
(51) Int. Cl.: H01M 10/625, H01M 10/6556, H01M 10/6563, H01M 10/6566, H01M 10/663, B60H 1/00

(54) **ELECTRIC BATTERY PACK WITH A HIGHLY EFFICIENT AIR-OPERATED TEMPERATURE-REGULATING SYSTEM AND RELATED METHOD**

(30) Priority: 14.11.2024 IT 202400025716
(71) Applicant: C.R.F. Società Consortile per Azioni, 10043 Orbassano (Torino) (IT)
(72) Inventor: RICCO, Raffaele, I-10043 Orbassano (Torino) (IT); MAZZARELLA, Carlo, I-10043 Orbassano (Torino) (IT); BERTHIER, Nicolas, 78300 Poissy (FR); DE MICHELE, Onofrio, I-10043 Orbassano (Torino) (IT)
(74) Representative: Buzzi, Notaro & Antonielli d'Oulx S.p.A.

(57) **Abstract**

A battery pack (1) comprises a plurality of battery cells (2) arranged within a container configured to define one or more passages for a forced flow of temperature-regulating air that maintains the battery cells (2) within a predetermined temperature range. The cells (2) of the battery pack (1) are divided into a plurality of separate blocks (5), each provided with a respective container (5A) isolated from the containers (5A) of the other blocks (5). In the container (5A) of each block (5) is arranged at least one group (3) of battery cells (2). Most, or all, of the temperature-regulating air flow is supplied cyclically only to one of the blocks (5) of battery cells, for a determined time, while the other blocks (5) of cells receive a relatively reduced or null flow of temperature-regulating air, such that, at the end of each cycle, all the blocks (5) of battery cells have received in turn, for a determined time interval, a major flow of temperature-regulating air. In this way it is possible to obtain a much higher heat exchange efficiency compared to the case where the flow rate of the temperature-regulating air were constantly distributed equally among the different blocks of cells. During a warm-up phase, after a cold activation of the battery pack (1), the air flow is supplied in turn only to the blocks (5) of a part of the battery pack (1), so as to make the heating of this part of the battery pack (1) faster. During a charging phase of the battery pack (1), the charging electric current can be supplied only to the block (5) of the battery pack (1) that in turn receives the major air flow, so as to make the cooling more effective where it is most necessary.

## Description

### Field of the invention

The present invention relates to an electric battery pack, of the type comprising a plurality of battery cells arranged within a container that is configured so as to define one or more passages for a forced flow of temperature-regulating air, adapted to maintain the temperature of the cells of the battery pack within a determined range.

### Prior art

Battery packs of the type indicated above are in particular used to power traction electric motors of electric or hybrid vehicles.

In general, it is of fundamental importance to ensure that during the use of the electric vehicle, the battery cells are always at a temperature contained within a predetermined range, typically between a minimum threshold of 20° C and a maximum threshold of 55° C. The battery cells used in electric vehicles are typically lithium-ion battery cells, which tend to generate heat as a result of the chemical reaction that takes place inside the battery cell during operation, and also due to the Joule effect caused by the passage of current inside the battery. The term "battery operation" here means both the battery charging process and the discharging process, which typically occurs during vehicle travel. It should be noted that the most critical operating conditions of the battery, which involve a risk of cell overheating, are those related to the fast charging process, i.e., charging the battery in a time of less than an hour, and those related to a fast discharge process. A particular case of fast discharge is when the vehicle is used to supply electrical energy to a home, acting as an energy accumulator not for traction but for domestic use. Numerous models of electric vehicles provide this function.

During normal operating conditions of the battery unit, it is necessary to have a temperature-regulating system capable of performing a cooling action, to counteract the temperature increase due to the heat generated in the cells for the reasons indicated above. Conversely, for example, in the case of activation of the vehicle's electric motor after a prolonged stop at a very low ambient temperature, it is necessary to have a temperature-regulating system capable of performing a heating action.

Several solutions are already known which provide for the use of a temperature-regulating system configured to supply a flow of temperature-controlled air inside the container of the battery pack, whereby the air flow comes into direct contact with the battery cells (see, for example, documents US 2016/211560 A1 and US 2016/211561 A1). However, these solutions have proven not entirely satisfactory, because the air can cause corrosion of the poles and the container of the individual cells.

The Applicant has previously proposed (see, for example, the Italian patent application IT 10 2024 016933, still secret at the filing date of the application), solutions in which the container of the battery pack comprises a temperature-regulating jacket that allows the passage of a flow of temperature-regulating air while avoiding direct contact of the air with the battery cells. Solutions of this type eliminate the risk of damage to the cells caused by the humidity contained in the air flow. Heat transfer occurs by conduction through the wall of the cell container. Naturally, in solutions of this type, the efficiency of heat transfer is relatively low, as the heat transfer occurs indirectly, through the wall of the cell container. Furthermore, the heat transfer may be non-uniform resulting in the formation of hot spots, which can reduce the performance and longevity of the battery pack.

Furthermore, in solutions of this type, the air flow used for temperature regulation of the battery pack is derived from the vehicle's HVAC system, which implies a limit to the maximum flow rate of air usable for temperature regulation of the battery pack.

There is therefore a need for further improvements in this field.

### Object of the invention

The main object of the present invention is to provide an electric battery pack equipped with a temperature-regulating system of the type indicated at the beginning of the present description, which has a significantly higher heat exchange efficiency compared to the solutions previously proposed.

In particular, an object of the invention is to provide a system for maintaining the temperature of the battery cells of a battery pack within a determined range, using a forced flow of temperature-controlled air, in which direct contact between the air flow and the battery cells is avoided, so as to eliminate the risk of damage to the cells, but which nevertheless is capable of achieving a significantly higher heat exchange compared to the solutions previously proposed.

A further particular object of the invention is to provide a battery pack of the aforementioned type, in which the flow of temperature-regulating air is supplied by an HVAC system of an electric or hybrid vehicle, in which the aforementioned results can be achieved without the need to use an increased air flow rate compared to that obtainable with conventional HVAC systems.

Finally, a further object of the invention is to achieve all the aforementioned objectives with relatively simple and low-cost means.

### Summary of the invention

In view of achieving one or more of the aforementioned objects, the invention is directed to an electric battery pack of the type indicated at the beginning of the present description, wherein the cells of the battery pack are divided into a plurality of separate blocks, each provided with a respective container isolated from the containers of the other blocks,
wherein at least one group of battery cells is arranged in the container of each block,
wherein a distributor device is associated with the battery pack, configured to supply, in operation, a major flow of temperature-regulating air, amounting to most, or all, of the air flow supplied to the battery pack, cyclically only to one of the blocks of cells, while the other blocks of cells receive a relatively reduced or null flow of temperature-regulating air, such that, at the end of each cycle, all the blocks of cells have received in turn, for a determined time interval, said major flow of temperature-regulating air.

In the preferred embodiment, the container of each block of cells defines a temperature-regulating jacket in which the temperature-regulating air can flow without entering into direct contact with the battery cells. The temperature-regulating jacket of each block communicates with an inlet opening intended to receive the flow of temperature-regulating air and with an outlet opening, for the exit of the flow of temperature-regulating air from the battery pack.

In an example, the distributor device has a body with an inlet connected to a system for supplying temperature-regulating air to the battery pack, a plurality of outlets connected to inlet openings of the different blocks of cells, and a movable member within the body of the distributor device having different operating positions that determine the cyclic supply of said major flow of temperature-regulating air each time only to one of the blocks of cells.

Preferably, the battery pack according to the invention is intended to be used for powering a traction electric motor of an electric or hybrid vehicle and the system for supplying the flow of temperature-regulating air is intended to be connected to an HVAC system of the vehicle and includes at least one fan to activate the forced flow of temperature-regulating air.

Thanks to the aforementioned characteristics, the invention allows to significantly increase the effectiveness of the heat exchange between the temperature-regulating air flow and the battery cells.

The concept underlying the invention is that it is more advantageous to supply in turn most, or all, of the temperature-regulating air flow only to one of the blocks of cells of the battery pack, rather than constantly distributing the air flow among all the blocks (with the consequence that the portion of flow received by each block is always relatively small).

During each operating cycle, all the blocks of cells into which the battery pack is divided therefore receive in turn an air flow equal to the majority or even the totality of the air flow supplied by the HVAC system. This results in a higher velocity of the air flow temporarily supplied to each block, with the consequence of favoring the establishment of a turbulent, rather than laminar, flow of air in the cooling jacket, resulting in the possibility of extracting up to five times more heat.

As is evident, the invention solves the problem of the limited heat removal capacity of the previously proposed solutions with indirect air cooling, without requiring an increase in the air flow rate supplied by the HVAC system, but rather by modifying the way in which the air flow is distributed. By supplying most, or all, of the air flow cyclically to only one block of cells at a time, the system according to the invention allows a turbulent flow regime of the air to be achieved within the blocks of cells, resulting in a much higher heat exchange. The heat exchange efficiency is therefore significantly increased without the need to modify in any way the source of the supply air flow.

The invention also has for its object the method for the thermal control of an electric battery pack, using the system described above.

An objective that the invention certainly allows to achieve, especially in the case of a battery pack consisting of numerous blocks and with a particularly tortuous geometry of the supply ducts, is that by sectioning the air supply into blocks, it is certain that all blocks receive, albeit periodically or in any case alternately, a substantial flow rate of air, capable of ensuring the cooling of the cells.

In a particular case covered by the invention, which concerns the heating phase of the battery pack, having hardware that is capable of sectioning the supply of the coolant to the various blocks/modules, it is possible to heat only a portion of the entire battery pack, favoring the heating and delegating the heating of the entire battery pack to it during driving conditions. This certainly makes the warm-up phase faster, and allows the user to be in driving conditions sooner.

Regarding the opposite case, that in which one wants to cool the battery during an ultra-fast charge, one can consider charging the various modules alternately so that the block of cells being charged coincides with the one that sees the high (or total) flow rate of coolant: in this way, the thermal dissipation due to the Joule effect, for example, can be optimized with the cooling system.

### Detailed description of the invention

Further characteristics and advantages of the invention will result from the following description with reference to the attached drawings, provided by way of non-limiting example only, in which:
figure 1 is a perspective view of a system for the thermal control of an electric battery pack, according to a previous proposal by the same Applicant,
figure 2 is a schematic perspective view showing an example of an arrangement of battery cells in a battery pack according to the invention,
figure 3 shows an example of an embodiment of a battery pack according to the invention, in which groups of battery cells arranged as indicated in figure 2 are contained in separate containers, constituting different blocks of battery cells,
figure 4 is a schematic plan view of the battery pack of figure 3,
figure 5 is an exploded perspective view of a detail of figure 3, showing an example of a distributor device used in the battery pack according to the invention,
figure 6 is a perspective view of the movable member of the distributor device illustrated in figure 5,
figures 7, 8 are diagrams showing the operating principles of the temperature-regulating system of the battery pack according to the invention, and
figures 9-11 are diagrams showing the temperature variation and the variation of the cooling air flow rate inside a single block of battery cells of the battery pack according to the invention in three different operating conditions.

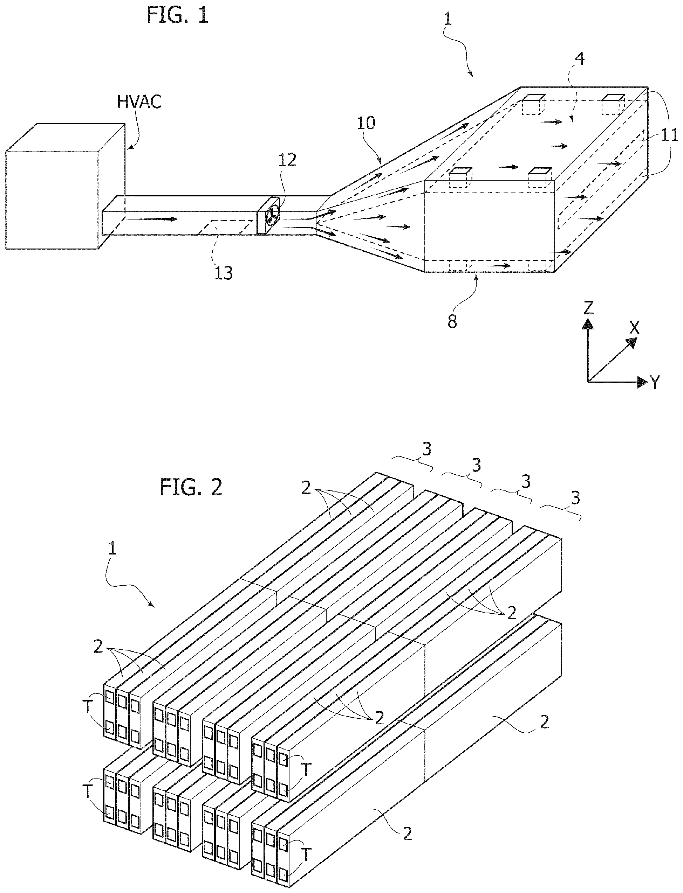

Figure 1 schematically illustrates the general characteristics of a system for the temperature regulation of an electric battery pack, operating with air, of a type that has been the subject, among others, of the previous Italian patent application IT 10 2024 014308, filed on 21.06.2024, and still secret at the priority date of the present invention.

In figure 1, the number 1 indicates as a whole an electric battery pack used in an electric or hybrid vehicle for powering a traction electric motor. The battery pack 1 comprises an external container 8, surrounding an internal container 4, within which are arranged multiple groups of battery cells (not visible in figure 1) of the battery pack. Between the external container 8, which can be made of metallic material and plastic material, and the internal container 4, which is preferably made of metallic material, a temperature-regulating jacket is defined which is traversed by a forced flow of temperature-controlled air, which therefore does not come into direct contact with the battery cells.

The present invention is applicable, in general, to any configuration of a battery pack and to any arrangement of battery cells within the battery pack. Furthermore, the invention is also applicable, in general, to any type of battery cells, for example prismatic cells, or pouch cells or cylindrical cells.

The example illustrated in figure 1 refers to the case of a battery pack including two superimposed levels of prismatic-type battery cells, each level comprising a plurality of groups of battery cells.

In the case of figure 1, the temperature-regulating jacket comprises an upper passage, a lower passage and an intermediate passage, arranged between the two superimposed levels of cells. In the case of the previously proposed solution, illustrated in figure 1, the three passages constantly receive respective air flows which exit through respective outlets 11. Still with reference to the previously proposed solution illustrated in figure 1, the temperature-regulating air comes from a supply duct 10, which is connected to the Heating, Ventilation and Air Conditioning or "HVAC" system of the vehicle, which is illustrated only schematically in figure 1. The duct 10 includes a fan 12 to increase the velocity of the air flow in the duct 10, and a flap 13, located upstream of the fan 12, with reference to the direction of the air flow, which can be opened by an electronically controlled actuator (not illustrated) to also supply, or only supply, ambient air into the temperature-regulating jacket of the battery pack 1.

As described above, in the previously proposed system, which is illustrated in figure 1, the heat exchange between the battery cells and the temperature-regulating air flow is relatively low and inefficient, because the entire flow rate of air supplied by the HVAC system is divided into equal parts among the different zones of the battery pack, so that each group of battery cells is subjected to a relatively reduced cooling action.

Figures 2-6 show an example of an embodiment of the battery pack according to the invention.

Figure 2 illustrates in perspective view an example of the arrangement of the battery cells in the battery pack according to the invention. In this example, the battery pack comprises a plurality of prismatic-type battery cells 2 arranged on two superimposed levels. In each level, four groups 3 of cells are provided, parallel to and spaced apart from each other. Each group 3 of cells includes three cells 2 having respective "tab" T, constituting the poles of the cells, at one end of the group, and another three cells having their respective tabs at the opposite end (not visible in figure 2) of the group.

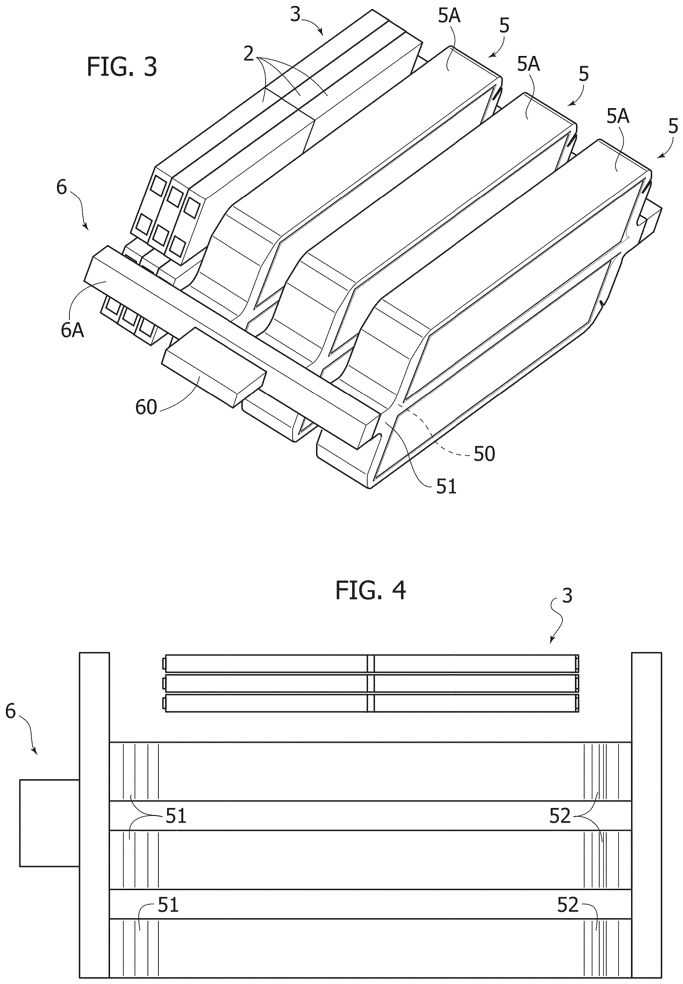

According to the invention, the different groups 3 of cells of the battery pack are divided into a plurality of separate blocks 5, each provided with a respective container 5A (see figure 3) isolated from the containers 5A of the other blocks 5.

In this example, with reference to figures 2, 3, the container 5A of each block 5 contains one group 3 from the upper level and one group 3 from the lower level, for a total of six cells on the upper level and six cells on the lower level. Naturally, this arrangement is given here by way of example only, since the number and arrangement of the cells within each block of cells can be any.

The number and arrangement of the passages formed in each container 5A and defining the temperature-regulating jacket, traversed by the flow of temperature-regulating air, can also be any. For example, the passages can be formed above the upper level of cells, below the lower level of cells and at an intermediate level between the upper and lower layers of cells.

In the plan view of figure 4, the container 5A of one of the blocks 5 has been removed, to show the arrangement of the cells, which is that illustrated in figure 2) in each block 5 of cells.

The temperature-regulating jacket formed inside each container 5A has an inlet opening 50 defined in an inlet portion 51 (figure 4) of each block 5 and an outlet opening defined by an outlet portion 52 of each block 5.

The inlet openings 50 of the four blocks 5 are connected to the supply duct coming from the HVAC system (not illustrated in figure 3) via a distributor device 6.

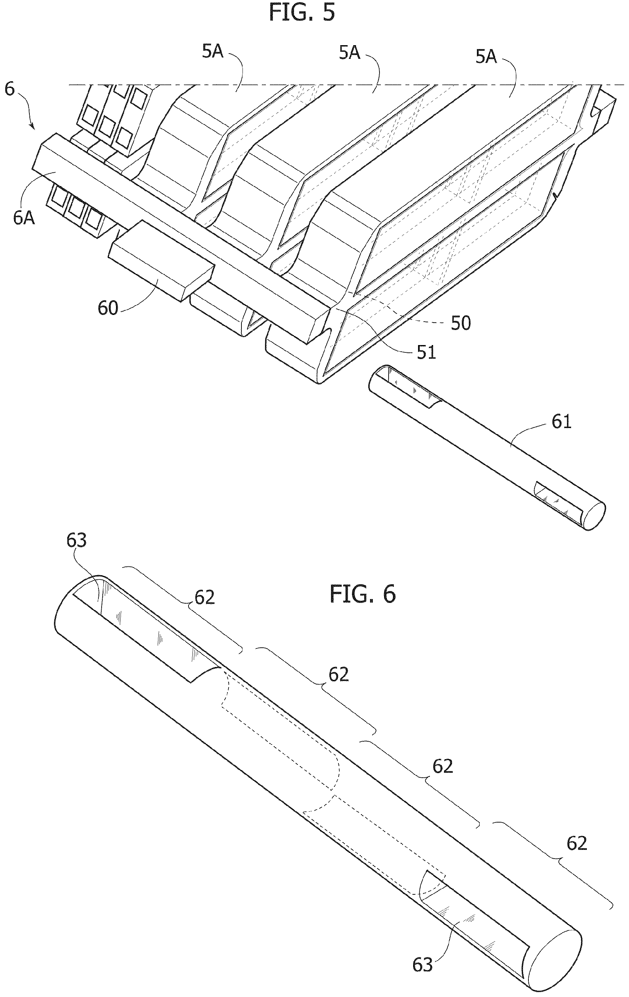

With reference to figure 5, the distributor device 6 has a body 6A with an inlet 60 connected to the air supply duct coming from the HVAC system and a plurality of outlets communicating with the inlets 50 of the blocks 5. Mounted rotatably within the body 6A of the distributor device 6 is a control member 61 having different operating positions that determine the cyclic supply of most, or all, of the temperature-regulating air flow coming from the HVAC system each time only to one of the blocks 5 of battery cells.

As visible in figure 6, the movable member 61 can be a tubular element intended to receive the temperature-regulating air flow inside it, and having four portions 62 with respective apertures 63, arranged in angularly different positions, such that only one of the portions 62 is at a time in communication with the inlet opening 50 of a respective block 5 of battery cells.

The movable member 61 can be rotationally driven by an electric motor (not illustrated) at a constant speed, such that, cyclically, the entire flow of temperature-regulating air coming from the HVAC system is supplied only to one of the blocks 5.

Alternatively, the movable member 61 can have, aligned with each main aperture 63, further auxiliary apertures 64 of smaller size, such that in every operating position of the movable member 61, a greater portion of the air flow is sent to only one block 5, while the other blocks 5 receive a reduced, but not null, portion of the air flow.

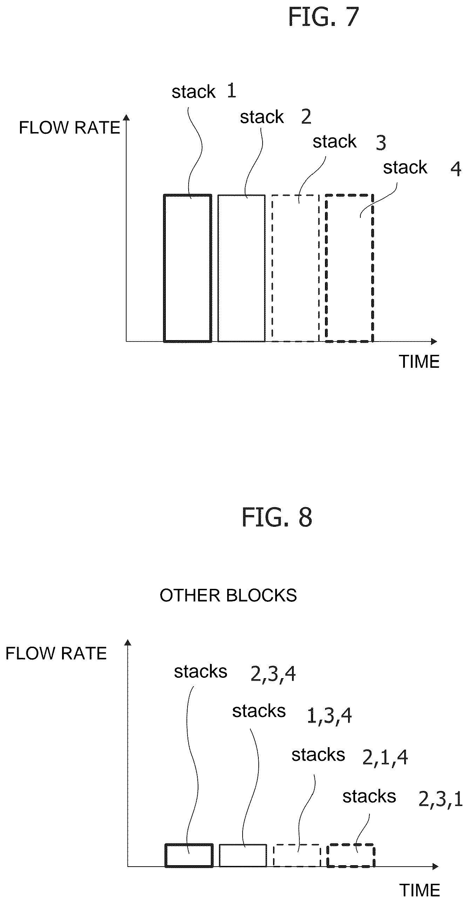

The operating principle of the temperature-regulating air distribution system, provided in the present invention, is illustrated by the diagrams of figures 7 and 8. With reference to figure 7, which refers to an example with four blocks of cells, the maximum air flow rate is supplied cyclically only to one of the blocks, for a determined time interval. Figure 7 shows the four phases in which in turn the four blocks receive a maximum flow rate, while the other blocks receive a very low or null flow rate. Figure 8 shows that, in turn, three blocks receive a reduced flow rate.

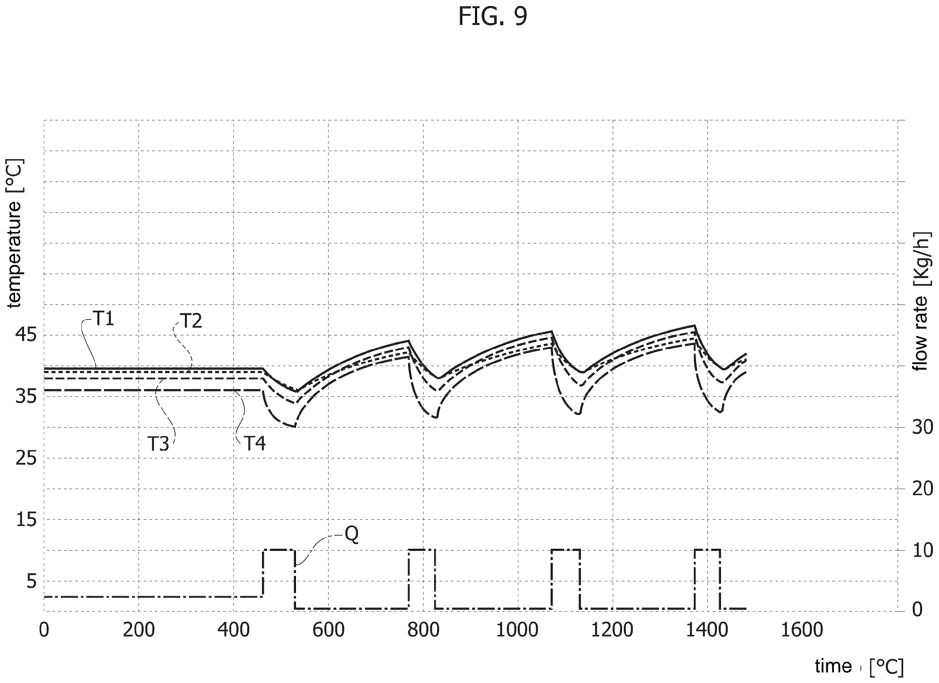

Each of figures 9-11 shows the temperature variation and the variation of the flow rate of the air flow in only one of the blocks of cells of a battery pack according to the invention. The lines T1, T2, T3 and T4 show the temperature variation on a face of the cell, respectively on one side, at the center, on the opposite side and on the lower side.

Figure 9 refers to a test in which a specific block of cells of the battery pack receives cyclically a maximum air flow rate (4 kg/h for each cell) for one minute, and receives a very low air flow rate (0.3 kg/h per cell) in the subsequent four minutes.

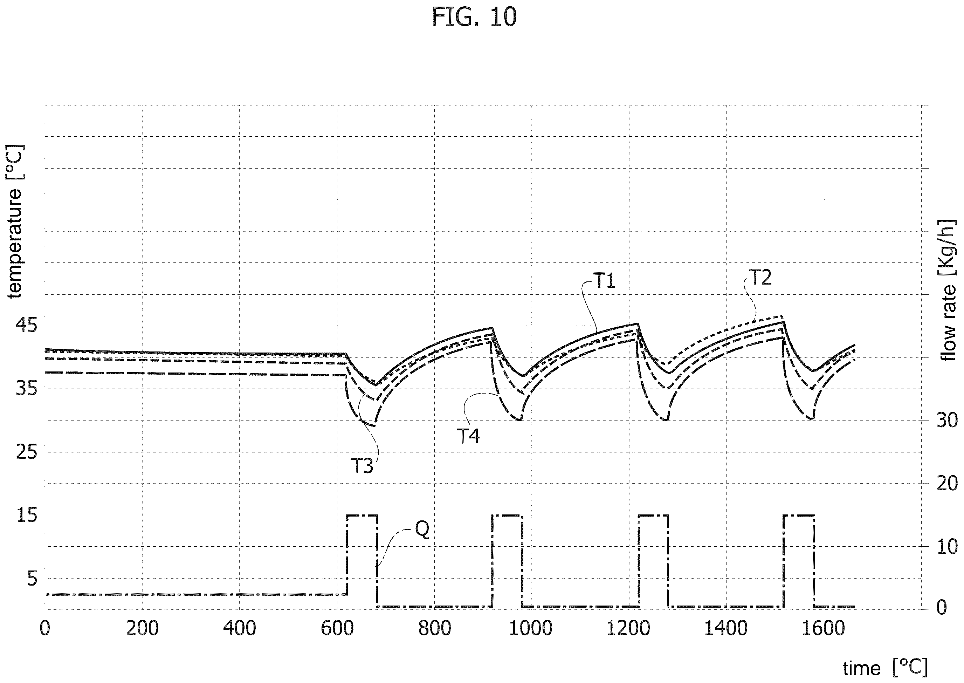

Figure 10 is a diagram analogous to that of figure 9, which refers to a test in which each battery block receives in each cycle for one minute a flow rate of 6 kg/h per cell of temperature-regulating air, and for the subsequent four minutes a reduced flow rate of 0.3 kg/h of air per cell, against a total power released by the cells of 80W.

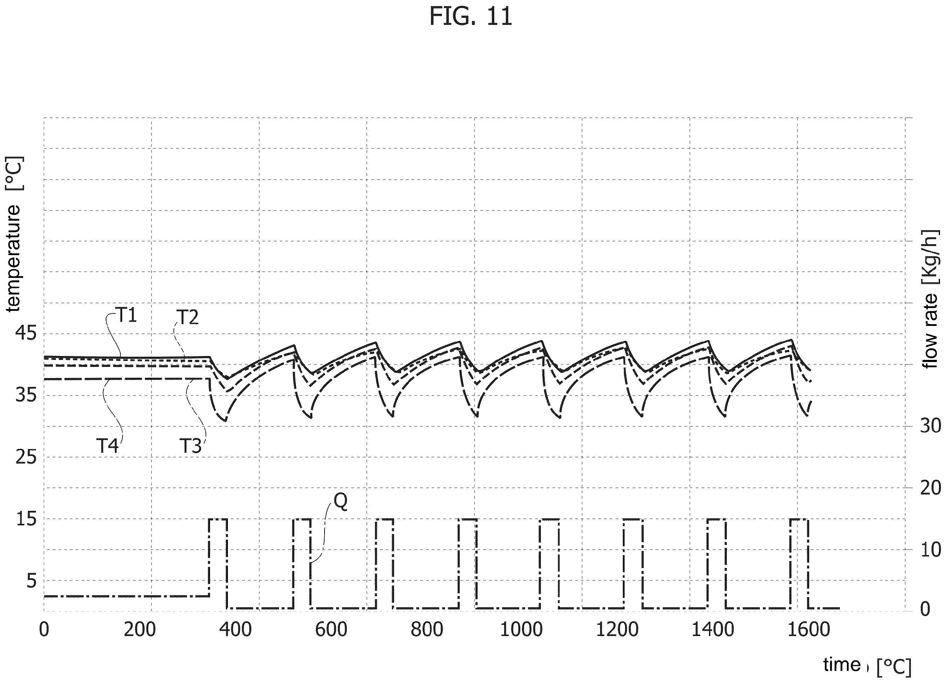

Figure 11 is a further diagram of the type of figures 9, 10, which refers to a case in which each cycle provides for 30 seconds in which a block of battery cells receives a maximum flow rate equal to 6 kg/h per cell, while in the subsequent two minutes the block receives a reduced flow rate, equal to 0.3 kg/h of air per cell

As is evident from the diagrams of figures 9-11, the solution according to the invention leads to an oscillation of the temperature of each group of battery cells, but nevertheless maintains the temperature of the cells constantly within an acceptable range (between 25° C and 50° C).

The aforementioned result is obtained thanks to the basic concept of the invention, which is to cyclically use the entire flow of temperature-regulating air, or the quasi-totality of this flow, to cool a single block of battery cells. This allows to cyclically obtain in each block, for a determined time, a high-velocity flow in which a turbulent regime is favored, so as to give rise to a high heat exchange, despite the cooling action always being indirect, so as to avoid any risk of damage to the battery cells due to the humidity contained in the temperature-regulating air flow.

As already indicated, it can be provided that during a warm-up phase, after a cold activation of the battery pack, in which the air flow is used to heat the battery pack, most, or all, of the air flow is supplied in turn only to the blocks 5 of a part of the battery pack, so as to make the heating of this part of the battery pack faster.

Furthermore, during a charging phase of the battery pack 1, in which the air flow is used to cool the battery pack, the supply of a charging electric current can be provided only to the block 5 of the battery pack that in turn receives the major flow rate of the air flow, so as to make the cooling more effective where it is most necessary.

Naturally, the principle of the invention remaining firm, the construction details and the forms of embodiment may vary widely from what has been described and illustrated by way of example only, without thereby departing from the scope of the present invention, as defined in the attached drawings.

## Claims

1. An electric battery pack (1), comprising a plurality of battery cells (2) arranged within a container configured to define one or more passages for a forced flow of temperature-regulating air, adapted to maintain the battery cells (2) within a predetermined temperature range,
wherein the cells (2) of the battery pack (1) are divided into a plurality of separate blocks (5), each provided with a respective container (5A) isolated from the containers (5A) of the other blocks (5),
wherein at least one group (3) of battery cells (2) is arranged in the container (5A) of each block,
wherein a distributor device (6) is associated with the battery pack (1), configured for supplying, in operation, a major flow of temperature-regulating air, amounting to most, or all, of the air flow supplied to the battery pack, cyclically only to one of the blocks (5) of cells, while the other blocks (5) of cells receive a relatively reduced or null flow of temperature-regulating air, such that, at the end of each cycle, a plurality of blocks (5) of cells have received in turn, for a determined time interval, said major flow of temperature-regulating air.

2. A battery pack according to claim 1, wherein the container (5A) of each block (5) of cells defines a temperature-regulating jacket in which the temperature-regulating air can flow without entering into direct contact with the battery cells (2), and wherein the temperature-regulating jacket of each block (5) communicates with an inlet opening (50) intended to receive the flow of temperature-regulating air and with an outlet opening (52) for the exit of the flow of temperature-regulating air from the battery pack.

3. A battery pack according to claim 1, wherein the distributor device (6) has a body (6A) with an inlet (60) connected to a system for supplying temperature-regulating air to the battery pack and a plurality of outlets connected to inlet openings (50) of the different blocks (5) of cells, and a movable member (61) within the body (6A) of the distributor device (6), having different operating positions that determine the cyclic supply of said majorA flow of temperature-regulating air each time only to one of the blocks (5) of cells.

4. A battery pack according to claim 1, wherein the battery pack (1) is intended to be used for powering a traction electric motor of an electric or hybrid vehicle, wherein the system for supplying the flow of temperature-regulating air is intended to be connected to an HVAC system of the vehicle and includes a fan to activate the forced flow of temperature-regulating air.

5. A battery pack according to claim 1, **characterized in that** it comprises an electronic controller for controlling said distributor device (6), and **in that** said electronic controller is configured for:
- during a warm-up phase, after a cold activation of the battery pack, in which the air flow is used to heat the battery pack (1), supplying most, or all, of the air flow in turn only to the blocks (5) of a part of the battery pack, so as to make the heating of this part of the battery pack faster,
- during a charging phase of the battery pack, in which the air flow is used to cool the battery pack, enabling the supply of a charging electric current only to the block of the battery pack that in turn receives the major flow of air.

6. A battery pack according to claim 1, **characterized in that** it comprises an electronic controller for controlling said distributor device (6), and **in that** said electronic controller is configured for:
- receiving data relating to the temperature of the cells (2) of the battery pack from sensors associated with the cells of the battery pack,
- in the case the temperature of one or more cells of a block of cells (5) of the battery pack detected by said sensors exceeds a determined threshold, controlling said distributor device to supply the majority of the air flow to said block.

7. A method for maintaining the temperature of an electric battery pack (1) within a determined range, wherein the electric battery pack comprises a plurality of battery cells (2) arranged within a container that is configured to define one or more passages traversed by a forced flow of temperature-regulating air,
wherein the cells (2) of the battery pack (1) are divided into a plurality of separate blocks (5), each provided with a respective container (5A), isolated from the containers (5A) of the other blocks (5),
wherein at least one group (3) of battery cells (2) is arranged in the container (5A) of each block (5),
said method comprising the operation of supplying a major flow of temperature-regulating air, amounting to most, or all, of the air flow supplied to the battery pack, cyclically only to one of the blocks (5) of battery cells (2), while the other blocks (5) of battery cells (2) receive a relatively reduced or null flow of temperature-regulating air, such that, at the end of each cycle, all blocks (5) of battery cells (2) have received in turn, for a determined time interval, said major flow of temperature-regulating air.

8. A method according to claim 7, **characterized in that** during a warm-up phase, after a cold activation of the battery pack, in which the air flow is used to heat the battery pack (1), the method comprises supplying most, or all, of the air flow in turn only to the blocks (5) of a part of the battery pack (1), so as to make the heating of this part of the battery pack (1) faster.

9. A method according to claim 7, **characterized in that** during a charging phase of the battery pack (1), in which the air flow is used to cool the battery pack (1), the method comprises enabling the supply of a charging electric current only to the block (5) of the battery pack that in turn receives the major flow of air.

10. A method according to claim 7, **characterized in that** it comprises:
- receiving data relating to the temperature of the cells (2) of the battery pack from sensors associated with the cells of the battery pack,
- in the case the temperature of one or more cells (2) of a block of cells (5) of the battery pack detected by said sensors exceeds a determined threshold, supplying the majority of the flow of temperature-regulating liquid to said block of cells (5).
